# EUROPEAN PATENT APPLICATION

(11) **EP 4 227 344 A1**
(43) Date of publication of application: **16.08.2023**
(21) Application number: 22861767.6
(22) Date of filing: 26.08.2022
(51) Int. Cl.: C08G 63/02, C08G 63/91, C08G 63/85

(54) **BLOCK COPOLYMER AND PREPARATION METHOD THEREFOR**

(30) Priority: 27.08.2021 KR 20210113916
(71) Applicant: Lg Chem, Ltd., Seoul 07336 (KR)
(72) Inventor: LEE, Hokeun, Daejeon 34122 (KR); KANG, Donggyun, Daejeon 34122 (KR); KIM, Eungwon, Daejeon 34122 (KR); KIM, Chul Woong, Daejeon 34122 (KR); PARK, Sai Bom, Daejeon 34122 (KR); LEE, Yeonju, Daejeon 34122 (KR); JO, Jung Hyun, Daejeon 34122 (KR); CHOI, Jung Yun, Daejeon 34122 (KR); BAEK, Song Yi, Daejeon 34122 (KR); LEE, Ju Yong, Daejeon 34122 (KR)
(74) Representative: Goddar, Heinz J.
(86) International application number: PCT/KR2022/012838
(87) International publication number: WO 2023/027559

(57) **Abstract**

Provided is a block copolymer having excellent mechanical properties along with environmental friendliness and biodegradability.

## Description

### [Technical Field]

### Cross-reference to Related Application

The present application is based on, and claims priority from, Korean Patent Application No. 10-2021-0113916, filed on August 27, 2021, the disclosure of which is hereby incorporated by reference herein in its entirety.

The present invention relates to a block copolymer having excellent mechanical properties along with environmental friendliness and biodegradable property.

### [Background Art]

Polylglycolic acid (PGA), which is a kind of aliphatic polyester, has received attention as an environmental friendly material having a biodegradable property, and at the same time, having excellent tensile strength and modulus.

Unlike petroleum-based resins previously used, such as polystyrene resins, polyvinyl chloride resins, polyethylene, etc., polylglycolic acid has effects of preventing the depletion of petroleum resources and suppressing carbon dioxide emission, etc., and therefore, it can reduce environmental pollution, which is a disadvantage of petroleum-based plastic products. As the environmental pollution problems caused by waste plastics, etc. have emerged as social problems, efforts are being made to expand the range of application of polylglycolic acid to products where general plastics (petroleum-based resins) have been used, such as food packaging materials and containers, electronic product cases, etc.

However, as compared to existing petroleum-based resins, polylglycolic acid has poor elongation (elongation to break), and thus exhibits brittleness. Therefore, since there is a limitation in its processing, polylglycolic acid has a limitation as a general-purpose resin.

Accordingly, in order to improve the above disadvantages, the present inventors found that a block copolymer obtained by introducing 3-hydroxypropionic acid (3HP) into polylglycolic acid has effects of improving mechanical properties while maintaining intrinsic properties of polylglycolic acid, thereby completing the present invention.

### [Disclosure]

### [Technical Problem]

There is provided a block copolymer having improved elongation while maintaining intrinsic properties of polylglycolic acid, and a preparation method thereof.

### [Technical Solution]

To solve the above problem, there is provided a block copolymer represented by the following Formula 1: 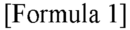 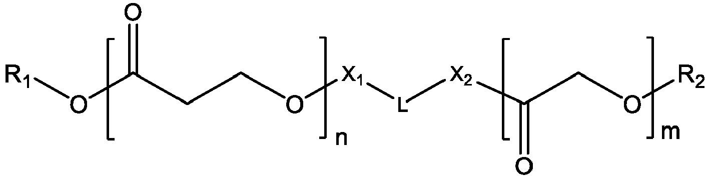 in Formula 1,
R₁ and R₂ are each independently hydrogen, N, O, S, substituted or unsubstituted C₁₋₂₀ alkyl,
X₁ and X₂ are each independently a direct bond, -COO-, -NR'CO-, -(NR')(COO)-, - R'NCONR'-, or -OCOO-, wherein R's are each independently hydrogen or C₁₋₂₀ alkyl,
L is substituted or unsubstituted C₁₋₁₀ alkylene; substituted or unsubstituted C₆₋₆₀ arylene; or substituted or unsubstituted C₂₋₆₀ heteroarylene containing one or more heteroatoms selected from the group consisting of N, O, and S, and
m and n are each independently an integer of 1 to 10,000.

The block copolymer of the present invention is a block copolymer in which a 3-hydroxypropionic acid-derived monomer and a glycolide-derived monomer are polymerized, as shown in Formula 1, and in particular, refers to a block copolymer in which various physical properties of polylglycolic acid, such as elongation, etc., are controlled by introducing the 3-hydroxypropionic acid-derived monomer.

When the 3-hydroxypropionic acid-derived monomer is introduced as a comonomer of polylglycolic acid, various physical properties of polylglycolic acid may be improved, but physical properties to be expressed vary depending on the linkage structure of each repeating unit and the introduction degree of each repeating unit. Accordingly, in the present invention, the linkage structure of each repeating unit and the introduction degree of each repeating unit are controlled to control the mechanical properties while maintaining the intrinsic properties of polylglycolic acid.

Hereinafter, the present invention will be described in detail.

In the present invention, the terms "the first", "the second", and the like are used to describe a variety of components, and these terms are merely employed to differentiate a certain component from other components.

A block copolymer according to one embodiment of the present invention includes a first block including a 3-hydroxypropionic acid (hereinafter, referred to as 3HP)-derived repeating unit, and a second block including a repeating unit in which glycolic acid is polymerized, wherein the first block and the second block are linked by a direct bond, an ester bond, an amide bond, a urethane bond, or a carbonate bond, thereby compensating for the disadvantage of the low elongation property of a biodegradable resin containing only polylglycolic acid. Further, the copolymer has excellent biodegradability while complementing the mechanical properties of respective homopolymers thereof.

Specifically, the block copolymer according to one embodiment of the present invention includes the first block which is a 3HP-derived repeating unit represented by the following Formula 2, and the second block which is a glycolide-derived repeating unit represented by the following Formula 3:

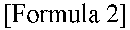

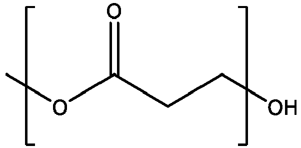

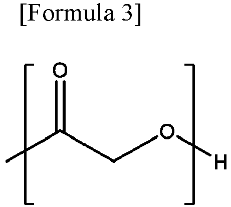

The 3HP-derived repeating unit represented by Formula 2 has advantages that it has excellent mechanical properties and a low glass transition temperature (Tg) of about -20°C, and thus has high elongation (Elongation to Break). Therefore, when the block copolymer is prepared by a chemical bond of such a poly(3-hydroxypropionate) (P3HP) and polylglycolic acid (PGA), it is possible to prepare a biodegradable material having excellent mechanical properties.

Further, the repeating unit represented by Formula 2 and the repeating unit represented by Formula 3 may be linked via a direct bond, an ester bond, an amide bond, a urethane bond, a urea bond, or a carbonate bond, and specifically, in Formula 1, X₁ and X₂ are each independently a direct bond, -COO-, -NR'CO-, -(NR')(COO)-, -R'NCONR'-, or -OCOO-, wherein R's are each independently hydrogen or C₁₋₂₀ alkyl.

Further, in Formula 1, L is a direct bond; substituted or unsubstituted C₁₋₁₀ alkylene; substituted or unsubstituted C₆₋₆₀ arylene; or substituted or unsubstituted C₂₋₆₀ heteroarylene containing one or more heteroatoms selected from the group consisting of N, O, and S.

In Formula 1, n and m are each independently an integer of 1 to 10,000. n represents the number of repeats of the 3HP-derived repeating unit. When introduced in the above range, physical properties such as elongation, etc. may be controlled while maintaining the intrinsic physical properties of polylglycolic acid. Further, m represents the number of repeats of the glycolic acid-derived repeating unit.

Preferably, X₁, X₂, and L are direct bonds.

Preferably, Formula 1 is represented by the following Formula 1-1: 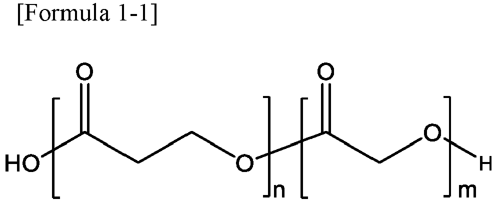 in Formula 1-1,
n and m are the same as defined in Claim 1.

Preferably, n is 10 to 700, and m is 10 to 700. More preferably, n is 20 or more, 30 or more, 40 or more, 50 or more, or 60 or more, and 650 or less, 600 or less, 550 or less, 500 or less, or 450 or less.

Further, more preferably, m is 20 or more, 30 or more, 40 or more, 50 or more, or 60 or more, and 650 or less, 600 or less, 550 or less, 500 or less, or 450 or less.

Preferably, a weight average molecular weight of the block copolymer according to the present invention is 10,000 g/mol to 500,000 g/mol. More preferably, the weight average molecular weight of the block copolymer is 12,000 g/mol or more, 15,000 g/mol or more, 20,000 g/mol or more, 25,000 g/mol or more, or 30,000 g/mol or more; and 480,000 g/mol or less, 460,000 g/mol or less, 440,000 g/mol or less, or 420,000 g/mol or less.

Further, the present invention provides a method of preparing the above-described block copolymer, the method including the steps of preparing a poly(3-hydroxypropionate) (step 1); and preparing the block copolymer by performing a ring-opening polymerization of a glycolide monomer in the presence of a poly(3-hydroxypropionate) initiator (step 2).

The step 1 is a step of preparing a poly(3-hydroxypropionate), wherein the poly(3-hydroxypropionate) refers to a homopolymer of 3-hydroxypropionic acid, and those prepared by controlling the degree of polymerization in consideration of the above-described ranges of n and m are used.

Preferably, a weight average molecular weight of the poly(3-hydroxypropionate) of the step 1 is 1,000 g/mol to 500,000 g/mol. More preferably, the weight average molecular weight of the poly(3-hydroxypropionate) may be 1,200 g/mol or more, 1,500 g/mol or more, 1,700 g/mol or more, or 2,000 g/mol or more, and 250,000 g/mol or less, 100,000 g/mol or less, or 50,000 g/mol or less.

The step 2 is a step of performing a ring-opening polymerization of a glycolide monomer using poly(3-hydroxypropionate) as an initiator.

The step 2 may be performed by bulk polymerization in which a solvent is not substantially used. In this regard, "a solvent is not substantially used" may encompass a case of using a small amount of a solvent for dissolving the catalyst, for example, a case of using a solvent of up to less than 1 ml per 1 kg of the monomer used. As the step 2 is performed by bulk polymerization, a process of removing the solvent after polymerization may be omitted, and decomposition or loss of the resin during the process of removing the solvent may also be suppressed.

Preferably, a weight ratio of the poly(3-hydroxypropionate) and the glycolide monomer in the step 2 is 1:99 to 99:1. More preferably, the weight ratio of the poly(3-hydroxypropionate) and the glycolide monomer in the step 2 is 1:50 to 50:1, 1:20 to 20:1, 1:10 to 10:1, or 1:1 to 1:10.

Meanwhile, since the preparation method involves the glycolide ring-opening polymerization reaction, it is performed in the presence of a glycolide ring-opening catalyst. Preferably, the step 2 is performed in the presence of a catalyst represented by the following Formula 4:

[Formula 4] MA¹ₚA2₂₋ₚ

in Formula 4,
M is Al, Mg, Zn, Ca, Sn, Fe, Y, Sm, Lu, Ti, or Zr,
p is an integer of 0 to 2, and
A¹ and A² are each independently an alkoxy or carboxyl group.

More preferably, the catalyst represented by Formula 4 may be tin(II) 2-ethylhexanoate (Sn(Oct)₂).

Preferably, the preparation method may be performed at 150°C to 200°C. Preferably, the preparation method may be performed for 5 minutes to 10 hours, and more preferably, for 10 minutes to 1 hour.

Further, the present invention provides a resin including the above-described block copolymer.

Further, the present invention provides a resin composition including the resin. The resin composition may further include other additives to improve physical properties, in addition to the resin.

In addition, the resin composition may be molded into any one or more molded articles selected from the group consisting of an injection molded article, an extrusion molded article, an inflation molded article, a fiber, a nonwoven fabric, a foam, a film, and a sheet.

Further, the present invention provides an article including the above-described block copolymer. The article may be an electronic material, a building material, a food packaging, a food container (disposable cup, tray, etc.), an industrial article, an agricultural article (e.g., mulching films), etc.

In addition, the resin including the block copolymer, the resin composition, and the article may further include additional comonomers according to required physical properties.

### [Effect of the Invention]

As described above, a block copolymer according to the present invention has excellent biodegradability and has controlled mechanical properties while maintaining intrinsic physical properties of polylglycolic acid, and accordingly, its application fields may be expanded.

### [Brief Description of Drawings]

FIG. 1 shows a graph showing the result of analyzing a block copolymer of Example 1 by NMR;
FIG. 2 shows a graph showing the result of analyzing a poly(3-hydroxypropionate) of Comparative Example 1 by NMR;
FIG. 3 shows a graph showing the result of analyzing a polylglycolic acid of Comparative Example 2 by NMR;
FIG. 4 shows a graph showing the result of measuring the block copolymer of Example 1 by gel chromatography;
FIG. 5 shows a graph showing the result of measuring a block copolymer of Example 2 by gel chromatography; and
FIG. 6 shows a graph showing the result of measuring biodegradability of the block copolymer of Example 1.

### [Detailed Description of the Embodiments]

Hereinafter, exemplary embodiments of the present invention will be described in more detail in the following Examples. However, the following Examples are only for illustrating the exemplary embodiments of the present invention, and the content of the present invention is not limited by the following Examples.

### Example 1

### Preparation Example 1-1: Preparation of poly(3-hydroxypropionate)

7 g (77.71 mmol) of 3-hydroxypropionate was dried, and then subjected to a polycondensation reaction in the presence of a p-toluene sulfonic acid (p-TSA) catalyst at 130 °C for 24 hours to prepare poly(3-hydroxypropionate).

A weight average molecular weight of the prepared poly(3-hydroxypropionate) was 2,430.

### Preparation Example 1-2: Preparation of block copolymer

In a 500 mL Teflon-coated round flask, 25 g of glycolide, 5 g of poly(3-hydroxypropionate) prepared in Preparation Example 1-1, and 0.01 g of tin(II) 2-ethylhexanoate were put. A sufficient vacuum was applied and vacuum drying was performed at room temperature for 4 hours.

Thereafter, the flask was placed in an oil bath pre-heated to 130°C, and the temperature was raised to 220°C, followed by a ring-opening polymerization reaction for 30 minutes. After the reaction was completed, a final block copolymer was obtained by removing the residual monomer through a devolatilization step of the product.

### Example 2

A block copolymer was prepared in the same manner as in Example 1, except that 15 g of glycolide and 10 g of poly(3-hydroxypropionate) were used in Preparation Example 1-2 of Example 1.

### Comparative Example 1: Preparation of poly(3-hydroxypropionate)

7 g (77.71 mmol) of 3-hydroxypropionate was dried, and then subjected to a polycondensation reaction in the presence of a p-toluene sulfonic acid (p-TSA) catalyst at 130 °C for 24 hours to prepare poly(3-hydroxypropionate).

### Comparative Example 2: Preparation of polylglycolic acid

In a 500 mL Teflon-coated round flask, 25 g of glycolide, 20 mg of octanol, and 0.01 g of tin(II) 2-ethylhexanoate were put. A sufficient vacuum was applied and vacuum drying was performed at room temperature for 4 hours.

Thereafter, the flask was placed in an oil bath pre-heated to 130°C, and the temperature was raised to 220°C, followed by a ring-opening polymerization reaction for 30 minutes. After the reaction was completed, a final homocopolymer was obtained by removing the residual monomer through a devolatilization step of the product.

### Evaluation

### (1) Nuclear Magnetic Resonance (NMR) analysis

NMR analysis was performed at room temperature using an NMR spectrometer including a Varian Unity Inove (500 MHz) spectrometer with a triple resonance 5 mm probe. The block copolymers or polymers of Examples and Comparative Examples were used after being diluted in a solvent at a concentration of about 10 mg/ml, respectively, and chemical shift was expressed in ppm. The solvents used for NMR measurement of Examples and Comparative Examples are as follows.

### Example 1: a mixed solvent of CDCl₃ and HFIP (hexafluoroisopropanol) at 3:1

### Comparative Example 1: CDCl₃

### Comparative Example 2: a mixed solvent of CDCl₃ and HFIP (hexafluoroisopropanol) at 3:1

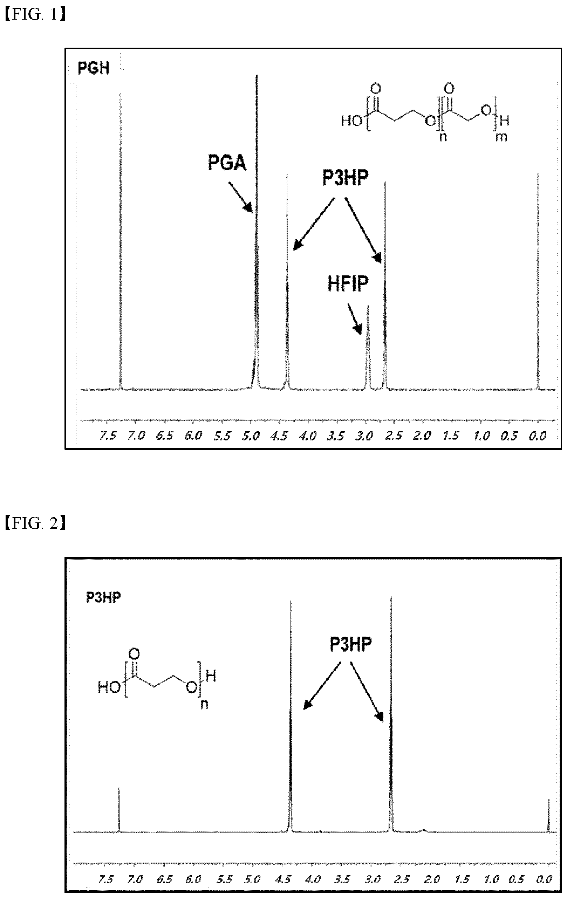

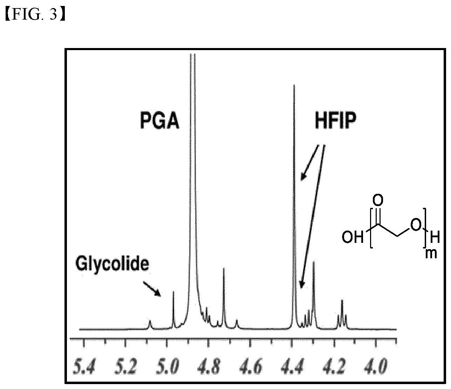

FIG. 1 shows a graph showing the NMR analysis result of the block copolymer prepared in Example 1, FIG. 2 shows a graph showing the NMR analysis result of poly(3-hydroxypropionate) prepared in Comparative Example 1, and FIG. 3 shows the NMR analysis result of polylglycolic acid prepared in Comparative Example 2.

Referring to FIGS. 1 to 3, the NMR analysis graph of the block copolymer of Example 1 showed a peak of the 3HP-derived repeating unit and a peak of the glycolide-derived repeating unit.

### (2) Gel Permeation Chromatography (GPC) analysis

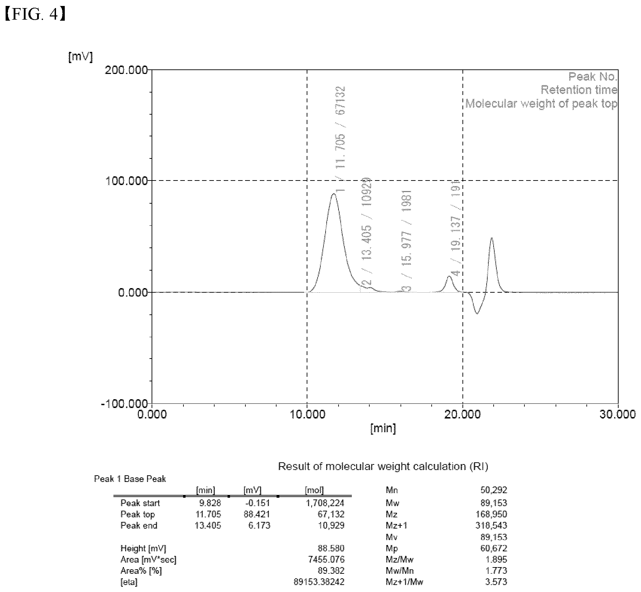

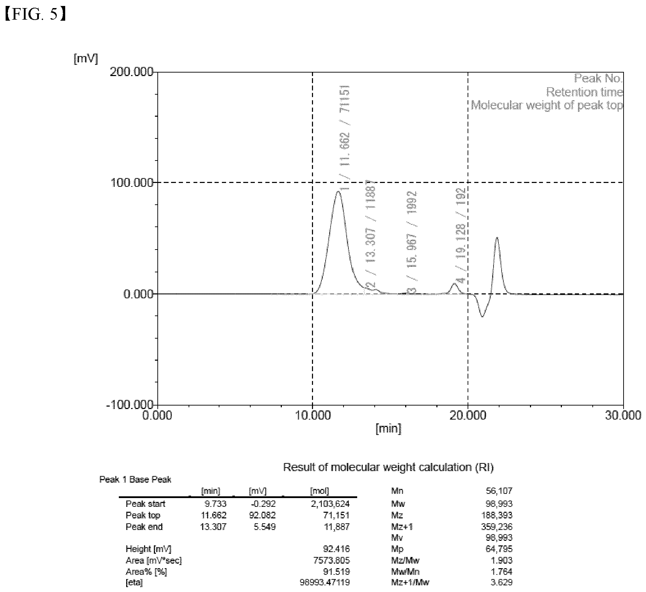

A weight average molecular weight (Mw) and a number average molecular weight (Mn) of the block copolymers prepared in Examples 1 and 2 were measured using gel permeation chromatography (GPC, Waters' E2640), and the results are shown in FIGS. 4 and 5.

In detail, the block copolymer prepared in Example 1 was dissolved in hexafluoro isopropanol (HFIP) at a concentration of 2 mg/ml, and 20 µl thereof was injected into GPC. HFIP was used as a mobile phase of GPC, and introduced at a flow rate of 1.0 mL/min, and the analysis was performed at 40 °C. Two Agilent Mixed-B columns were connected in series. As a detector, an RI detector was used. Mw values were derived using a calibration curve formed using polystyrene standard specimens. 9 kinds of polystyrene standard specimens, each having a weight average molecular weight of 2,000 g/mol, 10,000 g/mol, 30,000 g/mol, 70,000 g/mol, 200,000 g/mol, 700,000 g/mol, 2,000,000 g/mol, 4,000,000 g/mol, or 10,000,000 g/mol, were used.

### (3) Evaluation of physical properties

Tensile strength, Young's Modulus, and tensile elongation of the polymers prepared in Example 1 and Comparative Example 2 were measured.

In detail, according to ASTM D638, ASTM D536 V type specimen was produced at 190°C to 200°C with a hot-press machine (Limotem QM900S), and then measurement was performed using a UTM machine (Universal Testing Machine) at 10 mm/s with a load of 60 kg/f.

**[Table 1]**

| | Tensile strength (MPa) | Young's modulus (MPa) | Tensile elongation (%) |
|---|---|---|---|
| Comparative Example 2 | N/D | N/D | N/D |
| Example 1 | 32.6 | 1402 | 49.27 |

According to Table 1, degradation of the polylglycolic acid of Comparative Example 2 occurred during specimen preparation, and it was broken due to the high crystallinity and low elongation, and thus specimen preparation was impossible. Therefore, it was not easy to measure the physical properties through thermal processing.

In contrast, elongation of the block copolymer of Example 1 was secured, and thus it was possible to measure physical properties through thermoforming and processing, and its physical properties and processability were improved, as compared to the existing polylglycolic acid.

### (4) Measurement of biodegradability

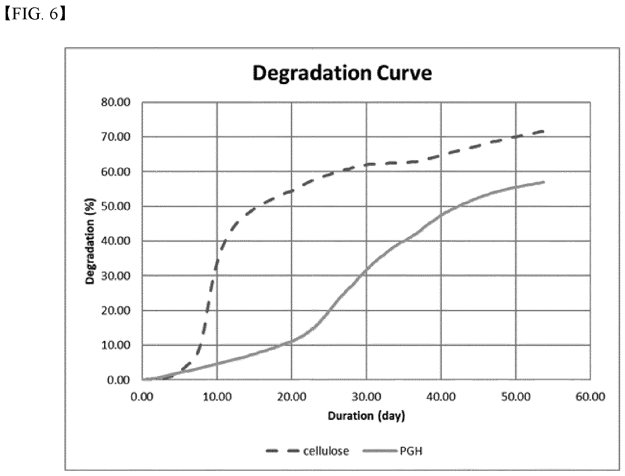

The results of measuring biodegradability of a standard material cellulose and the block copolymer of Example 1 under the home composting conditions of EN17427 are shown in FIG. 6.

In detail, the measurement was performed under home composting conditions (28 °C, under aerobic composting conditions, the water content in the compost was set to about 50%, the compost and the test polymer were mixed at a weight ratio of 10:1, and CO₂ generated was measured), and degradation (%) means a value obtained by calculating the weight of the sample decomposed into water and CO₂, based on the initial weight of the sample. In addition, for comparison, the result of measuring biodegradability of the standard material, cellulose (Sigma Aldrich, Cellulose, Cat. No. 310697) is also shown.

The result of measuring the biodegradability of the block copolymer of Example 1 showed that 40% thereof was decomposed within 40 days, and about 60% of cellulose was decomposed for the same time. It was confirmed that the biodegradability of Example 1 increased over time, as compared to the biodegradability of cellulose. These results confirmed that the block copolymer of Example 1 had the biodegradable property even under relatively mild home composting conditions.

## Claims

1. A block copolymer represented by the following Formula 1: 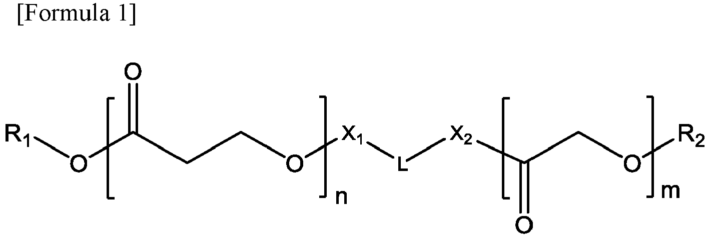 in Formula 1,
R₁ and R₂ are each independently hydrogen, N, O, S, substituted or unsubstituted C₁₋₂₀ alkyl,
X₁ and X₂ are each independently a direct bond, -COO-, -NR'CO-, -(NR')(COO)-, - R'NCONR'-, or -OCOO-, wherein R's are each independently hydrogen or C₁₋₂₀ alkyl,
L is a direct bond; substituted or unsubstituted C₁₋₁₀ alkylene; substituted or unsubstituted C₆₋₆₀ arylene; or substituted or unsubstituted C₂₋₆₀ heteroarylene containing one or more heteroatoms selected from the group consisting of N, O, and S, and
n and m are each independently an integer of 1 to 10,000.

2. The block copolymer of claim 1, wherein X₁, X₂, and L are direct bonds.

3. The block copolymer of claim 1, wherein Formula 1 is represented by the following Formula 1-1: 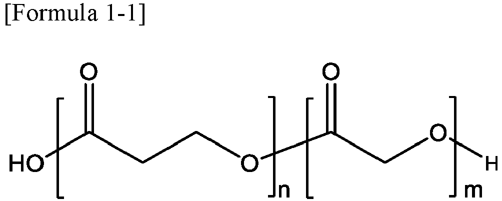 in Formula 1-1,
n and m are the same as defined in Claim 1.

4. The block copolymer of claim 1, wherein n is 10 to 700, and
m is 10 to 700.

5. The block copolymer of claim 1, wherein a weight average molecular weight of the block copolymer is 10,000 g/mol to 500,000 g/mol.

6. A method of preparing a block copolymer, the method comprising the steps of:
preparing a poly(3-hydroxypropionate) (step 1); and
preparing the block copolymer by performing a ring-opening polymerization of a glycolide monomer in the presence of a poly(3-hydroxypropionate) initiator (step 2).

7. The method of claim 6, wherein a weight average molecular weight of the poly(3-hydroxypropionate) of the step 1 is 1,000 g/mol to 500,000 g/mol.

8. The method of claim 6, wherein a weight ratio of the poly(3-hydroxypropionate) and the glycolide monomer in the step 2 is 1:99 to 99:1.

9. The method of claim 6, wherein the step 2 is performed in the presence of a catalyst represented by the following Formula 4:
[Formula 4] MA¹ₚA²₂₋ₚ
in Formula 4,
M is Al, Mg, Zn, Ca, Sn, Fe, Y, Sm, Lu, Ti, or Zr,
p is an integer of 0 to 2, and
A¹ and A² are each independently an alkoxy or carboxyl group.

10. The method of claim 6, wherein the catalyst is tin(II) 2-ethylhexanoate.

11. A resin comprising the block copolymer according to claims 1 to 5.

12. A resin composition comprising the resin of claim 11.

13. The resin composition of claim 12, wherein the resin composition is molded into any one or more molded articles selected from the group consisting of an injection molded article, an extrusion molded article, an inflation molded article, a fiber, a nonwoven fabric, a foam, a film, and a sheet.

14. An article comprising the block copolymer according to claims 1 to 5.
